# EUROPEAN PATENT SPECIFICATION

(11) **EP 1 043 557 B1**
(45) Date of publication and mention of the grant of the patent: **14.09.2005**
(21) Application number: 00201097.3
(22) Date of filing: 24.03.2000
(51) Int. Cl.: F25J 3/04

(54) **Integrated air separation plant and power generation system**
Integrierte Luftzerlegung- und Kraftanlage
Unité intégrée de séparation des gaz de l'air et de production d'énergie

(30) Priority: 09.04.1999 US 289286; 20.12.1999 US 466972
(43) Date of publication of application: 11.10.2000
(73) Proprietor: L'air Liquide, S.A. à Directoire et Conseil de Surveillance pour l'Etude et l'Exploitation des Procédés Georges Claude, 75321 Paris Cedex 07 (FR)
(72) Inventor: Brugerolle, Jean-Renaud, 75016 Paris (FR); Ha, Bao, San Ramon, CA 94583 (US); Guillard, Alain, 75016 Paris (FR); Massimo, Giovanni, 94450 Limeil Brevannes (FR); Saulnier, Bernard, 92700 Colombes (FR)
(74) Representative: Mercey, Fiona Susan

(56) References cited:
- EP-A- 0 357 299
- EP-A- 0 367 428
- EP-A- 0 538 118
- EP-A- 0 556 503
- EP-A- 0 568 431
- EP-A- 0 622 535
- EP-A- 0 717 249
- EP-A- 0 773 416
- EP-A- 0 959 314
- WO-A-97/39235
- US-A- 4 367 082
- US-A- 4 557 735
- US-A- 5 865 023
- PATENT ABSTRACTS OF JAPAN vol. 007, no. 029 (M-191), 5 February 1983 (1983-02-05) & JP 57 183529 A (HITACHI SEISAKUSHO KK), 11 November 1982 (1982-11-11)

## Description

This invention relates to an air separation plant and an air separation process integrated with another process. It also relates to an integrated power generation system and process involving an air separation process. Work is recovered from the nitrogen enriched stream produced by the air separation either by expanding the nitrogen enriched stream directly or by combustion of the nitrogen enriched stream with a fuel stream and expanding gas produced by the combustion. The present invention is in particularly related to an integrated power generation system process and apparatus in which a nitrogen enriched stream from an air separation unit is sent to a point upstream of the expander of a gas turbine.

Such integrated systems are well known. For example, EP-A-0622535 discloses an integrated power generation system in which nitrogen from an air separation unit is mixed with air and the mixture is sent to the compressor of a gas turbine and subsequently to the combustor. The nitrogen is cooled by expansion or addition of water before the mixing step to increase the gas throughput in the compressor.

EP-A-0538118 describes mixing nitrogen and compressed air from the air compressor before sending the mixture to the combustor of a gas turbine.

In US -A- 5,076,837, a nitrogen stream is heated using a waste gas stream before being expanded in a turbine. The waste gas stream is produced by a chemical process using oxygen from the air separation unit.

EP-A-0225864 uses combustion gases to preheat nitrogen from an adsorption process before expanding the nitrogen in a turbine.

US-A-4,785,621 discloses an air compressor which produces two air streams, one of which is sent to an air separation unit. The other air stream is mixed with the nitrogen produced by the air separation, warmed using waste heat from a fired gas turbine and subsequently expanded in a turbine.

JP-A-57183529 and JP-A-57083636 describe a coal gasification power plant in which nitrogen from an air separation unit is mixed with air, compressed and sent to a combustor to produce combustion gas.

In US-A-3,731,495 air from a gas turbine compressor is divided in three. One part feeds an air separation unit producing impure nitrogen, one part is sent to the combustor and the rest is mixed with the gases from the combustor and the impure nitrogen at a temperature of about 1350°F.

US -A-.4,557,735 shows a similar arrangement in which nitrogen which has served to regenerate the adsorbent beds is sent to the combustor of a gas turbine. In this case, an air stream is mixed with the compressed nitrogen and sent to the combustor.

EP-A-0568431 describes an air separation unit producing oxygen, argon and krypton/xenon which is integrated with a gas turbine.

According to one aspect of the invention there is provided an integrated air separation apparatus according to claim 1. According to another aspect of the invention there is provided a process according to claim 11. Further details of the process and of the apparatus are given in the dependent claims.

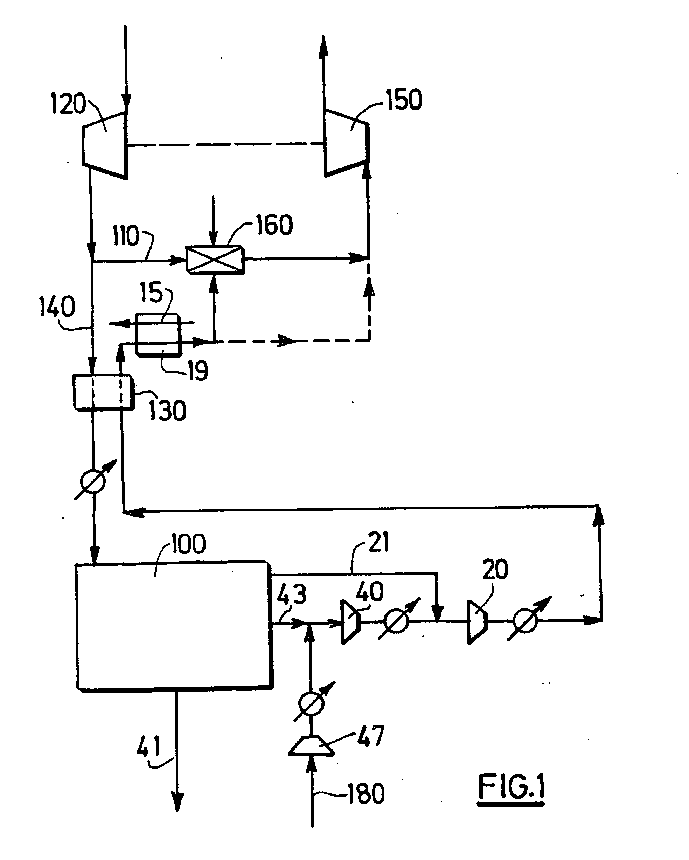

The invention will now be described in more detail with reference to the following figures: Figures 1,2,3,4 and 6 are schematic diagrams of six embodiments of the process of the present invention.

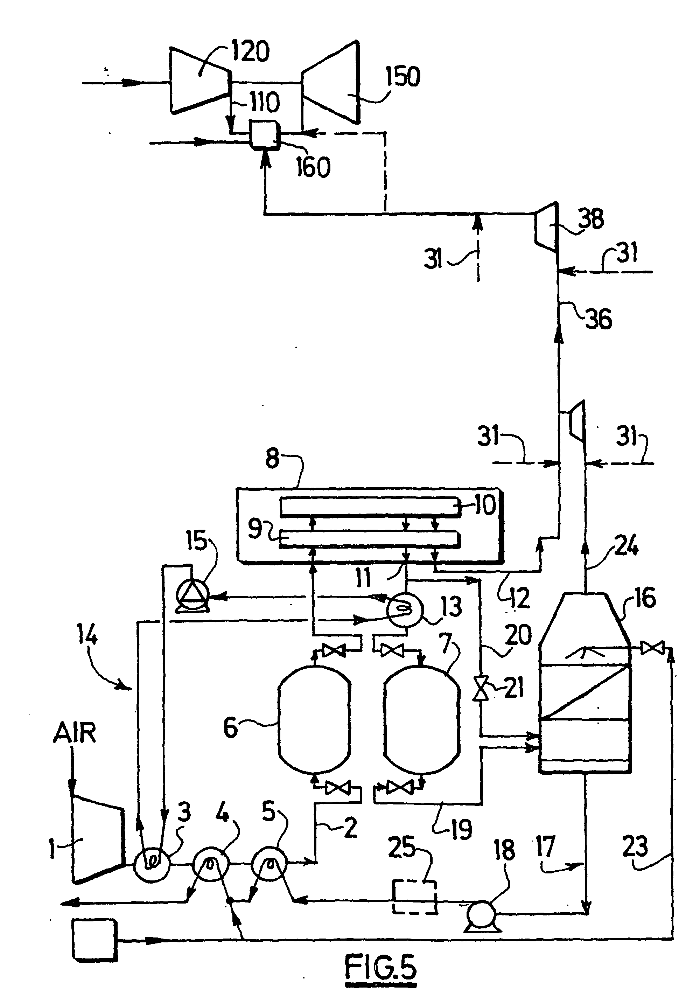

Figure 5 discloses an integrated air separation apparatus according to the prior art.

Figure 1 shows the case where nitrogen is mixed with air to form a nitrogen-enriched air stream; the mixture is then warmed and sent to a point upstream of the expander.

Air is compressed in a compressor 120 of a gas turbine. Part of the air 110 is sent to the combustor 160 and the rest 140 is sent to an air separation unit 100. The air separation unit may also receive air from another independent compressor (not shown).

The air separation unit is typically a cryogenic distillation unit comprising at least two thermally linked columns containing trays or structured packings. It may additionally comprise an argon separation column fed from one of the other columns or from the other column. Alternatively, it may simply comprise a single column.

The air separation unit 100 in the case illustrated produces oxygen enriched stream 41 which may, for example, be sent to a coal gasification unit (not shown) and nitrogen enriched streams 21, 43 at two different pressures. An air stream 180 from compressor 47 is optionally mixed with the low pressure nitrogen enriched stream 43, compressed in compressor 40, mixed with the high pressure nitrogen enriched stream 21 and further compressed in compressor 20. It is subsequently warmed in heat exchanger 130 against feed air 140 which is cooled in the heat exchanger 130 before cooling within the air separation unit 100 to a temperature suitable for distillation.

The air stream may alternatively be mixed with the nitrogen enriched stream downstream of compressor 40 or compressor 20.

The mixed stream is then sent to the combustor 160 with the fuel stream. The combustion gases are sent to the expander and are used to generate electricity or drive a compressor.

The mixed stream may alternatively be sent to the input of the expander as shown in dashed line in Figure 1.

Alternatively the air may be mixed with the nitrogen enriched stream downstream of the warming step.

It may be advantageous to heat the nitrogen enriched stream /air mixture in heat exchanger 19 downstream of heat exchanger 130 by heat exchange with a hot gaseous stream 15 as will be described in further detail below.

In all cases, the air stream may be replaced by a gaseous stream containing at least 50mol.-% of gaseous oxygen, argon or carbon dioxide or another gas which may be expanded safely in the turbine, preferably at least 60mol.-% of gaseous oxygen, argon or carbon dioxide, more preferably at least 70mol.-% of gaseous oxygen, argon or carbon dioxide and still more preferably at least 80mol.-% of gaseous oxygen, argon or carbon dioxide , for example an impure oxygen stream, an argon stream, a carbon dioxide stream.

In this way, it is possible to make use of a further gas to increase the mass of the stream to be expanded in the gas turbine and thereby increase the power that can be produced.

It will be appreciated that the gaseous nitrogen enriched stream may be withdrawn in gaseous form from the air separation columns or may be withdrawn in liquid form and vaporised against the feed air stream or a nitrogen stream, following an optional pressurisation step.

The nitrogen stream or the mixed stream (depending whether stream 180 is mixed with the nitrogen enriched streams 21,43 or not) is preferably heated to a temperature of at least 600°C, preferably around 1000°C, in exchanger 19, which may be a pebble heater.

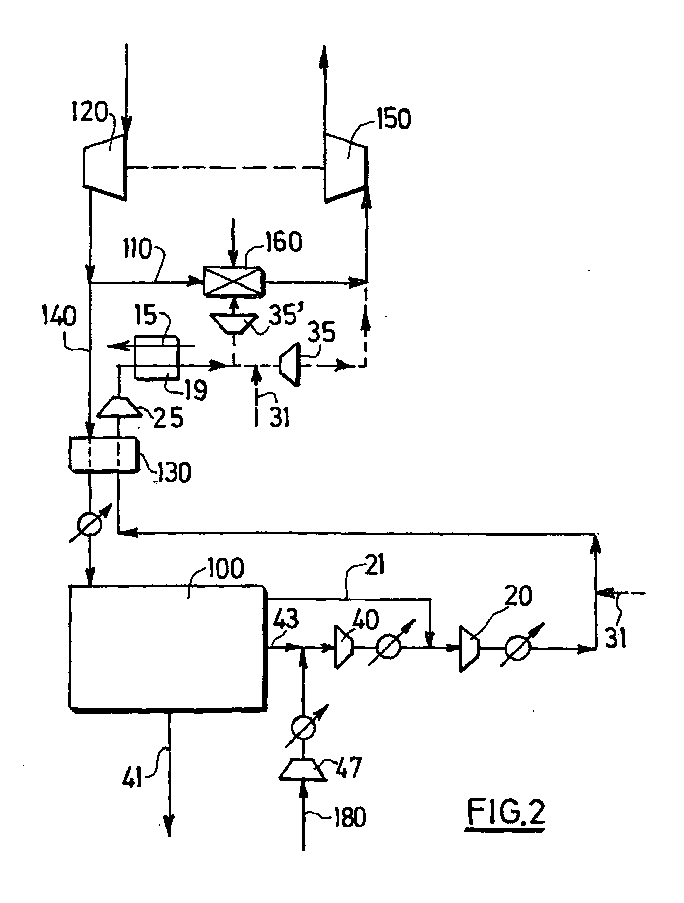

In Figure 2, the nitrogen stream or the mixed stream (depending whether stream 180 is mixed with the nitrogen enriched streams 21,43 or not) is compressed to a pressure of between 10 and 30 bara in compressor 20, then warmed to ambient temperature and compressed to between 30 and 100 bara in compressor 25 before being warmed to at least 600°C, preferably around 1000°C in exchanger 19. The heated nitrogen stream or mixed stream is sent to turbine 35 or 35' depending whether it is to be sent to the combustion chamber 160 or directly to the expander inlet. Preferably the compressor 25 and turbine 35,35' are coupled.

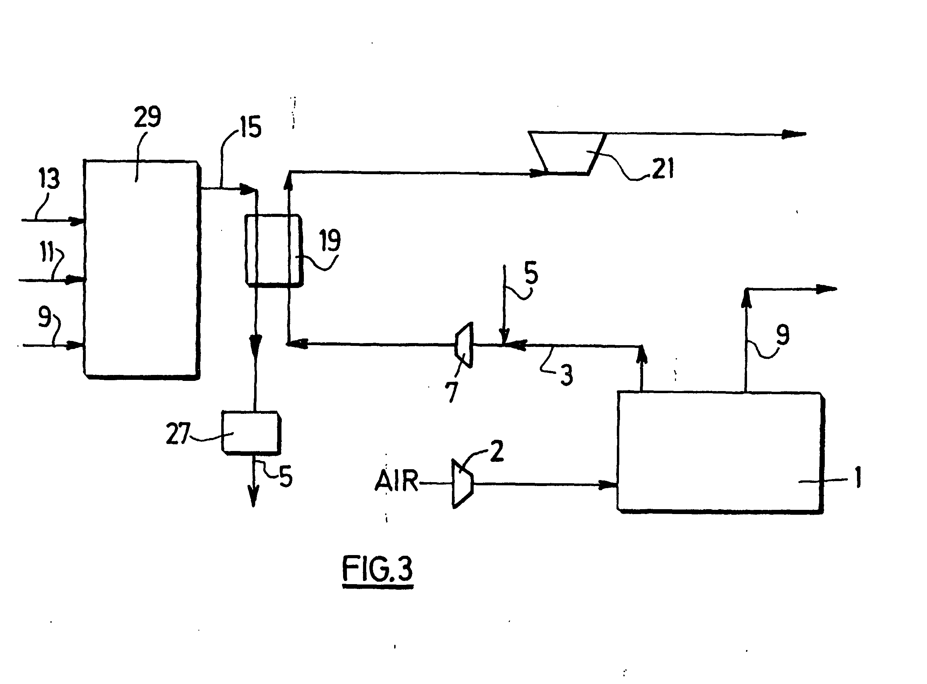

In Figure 3, a cryogenic air separation unit 1 comprises a double column with a low pressure column operating in a range of from about 5 to about 10 bar (not shown). The nitrogen enriched stream 3 containing 90mol.% nitrogen produced by the low pressure column is mixed with a further gas, in this case a gaseous carbon dioxide enriched stream 5 containing 90mol.% carbon dioxide at about the same pressure and compressed in compressor 7 to a pressure in a range of from about 15 to about 80 bara. The nitrogen from the high pressure column may also be compressed in compressor 7 and mixed with the carbon dioxide enriched stream.

Alternatively a nitrogen enriched stream from only the low pressure column or only the high pressure column may be used.

The double column may be replaced by a single column or a triple column or a system comprising four or more columns. The air separation unit may also comprise an argon column or a mixing column.

The pure oxygen 9 from the air separation unit 1 is sent to an auto thermal reformer 29 or another type of reformer together with natural gas 11 and steam 13.

Synthesis gas 15 is removed from the reformer 29 at a temperature of about 1050°C and a pressure in a range of from about 20 to about 80 bar.

The synthesis gas is cooled against the mixture 17 of principally nitrogen and carbon dioxide compressed in compressor 7 in a heat exchanger 19 which may be a ceramic heat exchanger or a regenerator.

The synthesis gas is then purified in unit 27 to eliminate the carbon dioxide it contains and at least part of this carbon dioxide is recycled as stream 5 to compressor 7.

The mixture of carbon dioxide and nitrogen at about 1000°C coming from heat exchanger 19 is expanded in a turbine 21 to produce energy and/ or to drive a compressor of the system such as the compressor of air separation unit 1.

The carbon dioxide enriched stream 5 may be replaced by an impure argon enriched stream (at least about 2 mol.% argon, preferably at least 30 mol.% argon), an impure oxygen stream (at least 25 mol.% oxygen, preferably at least about 60% oxygen). Alternatively a mixture of any gases containing at least 10% carbon dioxide and/or at least 2% argon and/or at least 25mol.% oxygen may be added to the nitrogen enriched stream 3 upstream of the warming step in heat exchanger 19, upstream or downstream of the compressor 7 depending on the pressure at which it is available.

The argon or oxygen enriched streams may come from air separation unit 1, another air separation unit or another source.

Preferably the added gases are produced by units consuming a fluid produced by the air separation unit or by the gas turbine

The additional air may come from the same compressor 2 which compresses air for the air separation unit.

The mixture of nitrogen and the further gas may be the sole feed to the turbine.

Alternatively the turbine may be fed by combustion gases from a combustor in addition to the nitrogen mixture.

The mixture may be heated using sources of heat such as slag from a gasifier, blast furnace gas, gas from the expander of a gas turbine, steam, and the like. In particular the source of heat may be a unit fed by oxygen enriched, argon enriched or nitrogen enriched fluid from the air separation plant which produces a product gas or waste gas at above ambient temperatures and preferably above 200°C.

The air compressor 2 may also produce air for a fuel combustor.

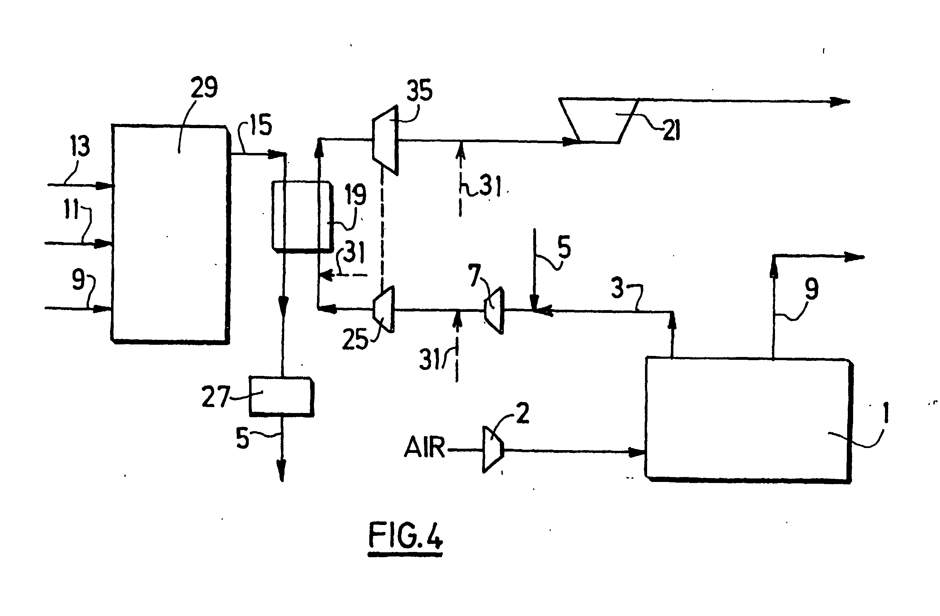

In Figure 4, the nitrogen gas is compressed in two compressors 7,25 to bring it to a pressure between 30 and 100 bars. The heated gas is then expanded in two expanders 35,21.

In Figure 5, there is shown an air separation unit in which compressed air from compressor 1 is cooled by indirect contact with water in heat exchangers 4,5 before being fed to purification beds 6,7, heat exchanger 9 and then to the air distillation apparatus 10. The water 17 is previously cooled in a cooling tower 16 by direct contact with waste nitrogen 19,20 from the air separation unit 10. Nitrogen enriched stream 19 has been used to regenerate the purification beds 6,7 and consequently contains carbon dioxide. Either stream 19 or stream 20 or both streams 19 and 20 may be sent to the cooling tower 16. This type of cooling apparatus is described in detail in US-A-5505050. At the top of the tower, there is produced a nitrogen stream saturated with water vapour 24 which is mixed with a stream of nitrogen enriched gas 12. In the preferred case where only stream 20 is sent to the cooling tower, the stream 24 will contain between 0 and 10%, preferably between 0 and 2 mol.% oxygen, between 0 and 2 mol.% argon, 0% carbon dioxide and about 5 mol.% water and the rest of the stream is nitrogen.

The mixed stream 36 is then compressed in compressor 38 and sent to the combustor 160 of a gas turbine. The combustor is also fed with fuel and compressed air 110 from compressor 120.

Optionally the compressed stream coming from compressor 38 may be heated to an elevated temperature (e.g. above 600°C) before being sent to the gas turbine. The heating may take place as described previously by indirect heat exchange with a waste stream or a stream which requires to be cooled.

Alternatively, as shown in dashed lines, all or part of the mixed stream may be sent directly to the input of the expander 150.

Compressor 120 may alternatively supply all or part of the air for the air separation unit.

Dashed lines 31 on the figures show that other gas streams available on the site such as air, steam and/or gas streams containing at least 20 mol.-% nitrogen, argon, oxygen and/or carbon dioxide may be added at various points of the process.

Preferably the added gases are produced by units consuming a fluid produced by the air separation unit or by the gas turbine.

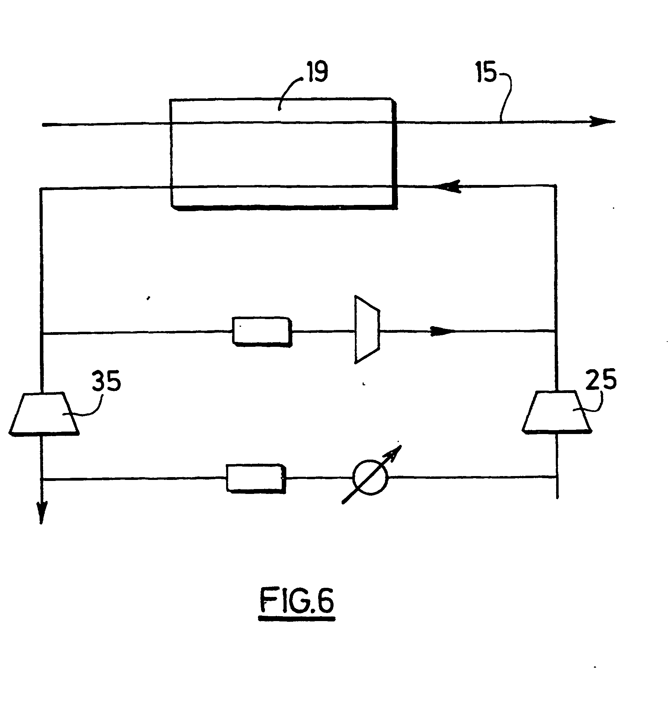

Figure 6 shows a variant of the other figures in which part of the heated nitrogen or heated gaseous mixture is fed back to the inlet of the exchanger 19. This step may take place at the pressure at which the exchange takes place or a lower pressure if compressor 25 and expander 35 are used. It may be necessary to compress the recycled gas if the pressure drop in exchanger 19 is large. The rest of the heated nitrogen or heated gaseous mixture is sent to a combustion chamber 160 or a turbine 21, 35,150 as previously described. This feature as mentioned also applies to the case where the nitrogen enriched gas is not mixed with another gas before being sent to the expander.

The recycle step is necessary in order to avoid too large a temperature difference at one end of the heat exchanger 19. The stream to be recycled may be cooled by various means including a refrigeration unit and/or a heat exchanger permitting heat exchange with a colder fluid, such as natural gas to be used as fuel for the gas turbine.

## Claims

1. An integrated air separation apparatus comprising an air separation unit (1,100) ; means (140) for sending air to the air separation unit, means for sending a nitrogen-enriched gas stream (3) from the air separation unit to a point upstream of an expander (21,150), and means for sending at least one further gas (5,24,31,180) which contains at least 25 mol.% oxygen, and/or at least 2 mol.% argon and/or at least 10 mol.% carbon dioxide to the nitrogen-enriched gas stream at a point upstream of the expander, means for mixing the at least one further gas with the nitrogen enriched stream from the air separation unit at a mixing point to form a gaseous mixture and either means for sending the mixture to the input of the expander or means for sending the gaseous mixture to an input of a combustor (160) upstream of a gas turbine expander (150) and means for sending the combustion gases from the combustor to the expander and
i) means for feeding the at least one further gas from the air separation unit to the mixing point and/or
ii) means for feeding a fluid from the air separation unit to a plant (29) and means for deriving the at least one further gas from the plant.

2. An apparatus according to claim 1 comprising a heat exchanger (130), means for sending the air to the heat exchanger, means for sending the air from the heat exchanger to the air separation unit (100), means for sending the nitrogen-enriched gas stream from the air separation unit to the heat exchanger, means for sending the nitrogen enriched stream from the heat exchanger to the point upstream of the expander, and means for sending the at least one further gas to the nitrogen-enriched gas stream at a point upstream or downstream of the heat exchanger.

3. An apparatus according to claim 1 or 2 wherein the expander to the inlet of which the gaseous mixture is sent, is a turbine (21).

4. An apparatus according to claim 1 or 2 comprising means for adding fuel to the gaseous mixture upstream of the combustor.

5. An apparatus according to any preceding claim comprising a compressor (120) for supplying air to the air separation unit (100) and/or to the combustor (160).

6. An apparatus according to any preceding claim comprising respective compressors for compressing air for the combustor (160) and the air separation unit (100).

7. An apparatus according to any preceding claim comprising means (19,130) for warming the nitrogen enriched stream, preferably upstream or downstream of the mixing point.

8. An apparatus according to claim 7 wherein the means for warming the nitrogen enriched stream comprise a heat exchanger (19), and means for sending a gaseous product or waste stream (15) from a plant in which an exothermic process takes place and at least the nitrogen enriched stream to the heat exchanger.

9. An apparatus according to claim 8 comprising means for feeding a gas or liquid (9) produced by the air separation plant or compressed air from a compressor (120) of the installation to the plant (29) in which the exothermic process takes place.

10. An apparatus according to any preceding claim comprising means for sending an oxygen enriched stream (9) from the air separation unit to a reformer (29) and means for deriving a carbon dioxide enriched stream (5) from a gas produced by the reformer and means for sending the carbon dioxide enriched gas to the nitrogen stream.

11. An integrated air separation process using an air separation unit (1,100) and an expander (21,150), comprising the steps of sending air to the air separation unit, sending a nitrogen enriched stream from the air separation unit to a point upstream of the expander, and sending at least one further gas stream (5,24,31,180) other than a fuel stream to a point upstream of the expander to form a mixture with the nitrogen enriched stream, sending the gaseous mixture to the input of the expander (21) or sending the gaseous mixture to the input of a combustor (160) of an expander (150) of a gas turbine, the at least one further gas (5,24,31,180) containing at least 25 mol.% oxygen and/or at least 2 mol.% argon and/or at least 10 mol% carbon dioxide and wherein the at least one further gas is a gas produced by the air separation unit and/or a gas derived from a plant fed by a fluid from the air separation unit.

12. A process according to claim 11 wherein at least one further gas (5,24,108) contains at least 70 mol.% oxygen and/or at least 30 mol.% argon or at least 90 mol.% carbon dioxide.

13. A process according to claim 12 wherein at least one further gas contains at least 80 mol.% oxygen or at least 80 mol.% argon or at least 95 mol.% carbon dioxide.

14. A process according to any of claims 11 to 13 comprising removing said further gas (5,24,31,180) from the air separation unit.

15. A process according to any of claims 11 to 14 wherein the enriched nitrogen stream is warmed either before or after the mixing step to a temperature of at least ambient temperature, preferably at least 600°C before being sent to the point upstream of the expander by indirect heat exchange with a gaseous stream which is a product or a waste stream.

16. The process of claim 15 wherein the gaseous stream is produced by a unit fed by an oxygen-enriched stream or a nitrogen enriched stream or an argon enriched stream from the air separation unit (1,100) or by a compressed air stream from a compressor (120) which also feeds air to the air separation unit.

## Patentansprüche

1. Integrierte Luftzerlegungsvorrichtung, umfassend eine Luftzerlegungseinheit (1, 100); Mittel (140) zum Senden von Luft zur Luftzerlegungseinheit, Mittel zum Senden eines mit Stickstoff angereicherten Gasstroms (3) von der Luftzerlegungseinheit zu einem Punkt stromaufwärts eines Expanders (21, 150) und Mittel zum Senden mindestens eines weiteren Gases (5, 24, 31, 180), das mindestens 25 Mol-% Sauerstoff und/oder mindestens 2 Mol-% Argon und/oder mindestens 10 Mol-% Kohlendioxid enthält, zum mit Stickstoff angereicherten Gasstrom an einem Punkt stromaufwärts des Expanders, Mittel zum Mischen des mindestens einen weiteren Gases mit dem mit Stickstoff angereicherten Strom von der Luftzerlegungseinheit an einem Mischpunkt, um ein gasförmiges Gemisch zu bilden, und entweder Mittel zum Senden des Gemischs zum Einlass des Expanders oder Mittel zum Senden des gasförmigen Gemischs zu einem Einlass einer Verbrennungseinrichtung (160) stromaufwärts eines Gasturbinen-Expanders (150) und Mittel zum Senden der Verbrennungsgase von der Verbrennungseinrichtung zum Expander und
i) Mittel zum Einspeisen des mindestens einen weiteren Gases von der Luftzerlegungseinheit in den Mischpunkt und/oder
ii) Mittel zum Einspeisen eines Fluids von der Luftzerlegungseinheit in eine Anlage (29) und Mittel zum Ableiten des mindestens einen weiteren Gases von der Anlage.

2. Vorrichtung nach Anspruch 1, umfassend einen Wärmetauscher (130), Mittel zum Senden der Luft zum Wärmetauscher, Mittel zum Senden der Luft vom Wärmetauscher zur Luftzerlegungseinheit (100), Mittel zum Senden des mit Stickstoff angereicherten Gasstroms von der Luftzerlegungseinheit zum Wärmetauscher, Mittel zum Senden des mit Stickstoff angereicherten Stroms vom Wärmetauscher zum Punkt stromaufwärts des Expanders und Mittel zum Senden des mindestens einen weiteren Gases zum mit Stickstoff angereicherten Gasstrom an einem Punkt stromaufwärts oder stromabwärts des Wärmetauschers.

3. Vorrichtung nach Anspruch 1 oder 2, wobei es sich bei dem Expander zum Einlass, zu dem das gasförmige Gemisch gesendet wird, um eine Turbine (21) handelt.

4. Vorrichtung nach Anspruch 1 oder 2, die Mittel zum Hinzufügen von Brennstoff zum gasförmigen Gemisch stromaufwärts der Verbrennungseinrichtung umfasst.

5. Vorrichtung nach einem der vorhergehenden Ansprüche, die einen Verdichter (120) zum Zuführen von Luft zur Luftzerlegungseinheit (100) und/oder zur Verbrennungseinrichtung (160) umfasst.

6. Vorrichtung nach einem der vorhergehenden Ansprüche, die für die Verbrennungseinrichtung (160) und die Luftzerlegungseinheit (100) jeweilige Verdichter zum Verdichten von Luft umfasst.

7. Vorrichtung nach einem der vorhergehenden Ansprüche, die Mittel (19, 130) zum Erwärmen des mit Stickstoff angereicherten Stroms, vorzugsweise stromaufwärts oder stromabwärts des Mischpunkts, umfasst.

8. Vorrichtung nach Anspruch 7, bei der die Mittel zum Erwärmen des mit Stickstoff angereicherten Stroms einen Wärmetauscher (19) und Mittel zum Senden eines gasförmigen Produkts oder Abgasstroms (15) von einer Anlage, in der ein exothermer Vorgang stattfindet, und mindestens des mit Stickstoff angereicherten Stroms zum Wärmetauscher umfassen.

9. Vorrichtung nach Anspruch 8, die Mittel zum Einspeisen eines Gases oder einer Flüssigkeit (9), das bzw. die von der Luftzerlegungseinheit produziert wurde, oder von verdichteter Luft von einem Verdichter (120) der Installation in die Anlage (29), in der der exotherme Vorgang stattfindet, umfasst.

10. Vorrichtung nach einem der vorhergehenden Ansprüche, die Mittel zum Senden eines mit Sauerstoff angereicherten Stroms (9) von der Luftzerlegungseinheit zu einem Reformer (29) und Mittel zum Ableiten eines mit Kohlendioxid angereicherten Stroms (5) aus einem vom Reformer produzierten Gas und Mittel zum Senden des mit Kohlendioxid angereicherten Gases zum Stickstoffstrom umfasst.

11. Integriertes Luftzerlegungsverfahren unter Verwendung einer Luftzerlegungseinheit (1, 100) und eines Expanders (21, 150), umfassend die Schritte des Sendens von Luft zur Luftzerlegungseinheit, Sendens eines mit Stickstoff angereicherten Stroms von der Luftzerlegungseinheit zu einem Punkt stromaufwärts des Expanders und Sendens mindestens eines weiteren Gasstroms (5, 24, 31, 180), bei dem es sich nicht um einen Brennstoffstrom handelt, zu einem Punkt stromaufwärts des Expanders, um ein Gemisch mit dem mit Stickstoff angereicherten Strom zu bilden, Sendens des gasförmigen Gemischs zum Einlass des Expanders (21) oder Sendens des gasförmigen Gemischs zum Einlass einer Verbrennungseinrichtung (160) eines Expanders (150) einer Gasturbine, wobei das mindestens eine weitere Gas (5, 24, 31, 180) mindestens 25 Mol-% Sauerstoff und/oder mindestens 2 Mol-% Argon und/oder mindestens 10 Mol-% Kohlendioxid enthält und wobei es sich bei dem mindestens einen weiteren Gas um ein von der Luftzerlegungseinheit produziertes Gas und/oder ein von einer Anlage, in die ein Gas von der Luftzerlegungseinheit eingespeist wurde, abgeleitetes Gas handelt.

12. Verfahren nach Anspruch 11, wobei mindestens ein weiteres Gas (5, 24, 180) mindestens 70 Mol-% Sauerstoff und/oder mindestens 30 Mol-% Argon oder mindestens 90 Mol-% Kohlendioxid enthält.

13. Verfahren nach Anspruch 12, wobei mindestens ein weiteres Gas mindestens 80 Mol-% Sauerstoff oder mindestens 80 Mol-% Argon oder mindestens 95 Mol-% Kohlendioxid enthält.

14. Verfahren nach einem der Ansprüche 11 bis 13, das das Entfernen des weiteren Gases (5, 24, 31, 180) aus der Luftzerlegungseinheit umfasst.

15. Verfahren nach einem der Ansprüche 11 bis 14, wobei der mit Stickstoff angereicherte Strom entweder vor oder nach dem Mischschritt auf eine Temperatur von mindestens Umgebungstemperatur, vorzugsweise mindestens 600 °C, erwärmt wird, bevor er durch indirekten Wärmetausch mit einem gasförmigem Strom, bei dem es sich um ein Produkt oder einen Abgasstrom handelt, zum Punkt stromaufwärts des Expanders gesendet wird.

16. Verfahren nach Anspruch 15, wobei der gasförmige Strom von einer Einheit produziert wird, in die ein mit Sauerstoff angereicherter Strom oder ein mit Stickstoff angereicherter Strom oder ein mit Argon angereicherter Strom von der Luftzerlegungseinheit (1, 100) oder ein Strom verdichteter Luft von einem Verdichter (120), der auch Luft in die Luftzerlegungseinheit einspeist, eingespeist wurde.

## Revendications

1. Dispositif de séparation d'air intégré comprenant une unité de séparation d'air (1, 100), des moyens (140) pour envoyer de l'air à l'unité de séparation d'air, des moyens pour envoyer un courant de gaz enrichi en azote (3) à partir de l'unité de séparation d'air jusqu'à un point situé en amont d'un dispositif de dilatation (21, 150), et des moyens pour envoyer au moins un gaz supplémentaire (5, 24, 31, 180) contenant au moins 25 % molaires d'oxygène, et/ou au moins 2 % molaires d'argon, et/ou au moins 10 % molaires de dioxyde de carbone dans le courant de gaz enrichi en azote en un point situé en amont du dispositif de dilatation, des moyens pour mélanger le au moins un gaz supplémentaire avec le courant enrichi en azote provenant de l'unité de séparation d'air en un point de mélange dans le but de former un mélange gazeux, et soit des moyens pour envoyer le mélange à l'entrée du dispositif de dilatation, soit des moyens pour envoyer le mélange gazeux à une entrée d'un brûleur (160) situé en amont d'un dispositif de dilatation (150) de turbine à gaz, et des moyens pour envoyer les gaz de combustion émis par le brûleur au dispositif de dilatation, et
i) des moyens pour amener le au moins un gaz supplémentaire provenant de l'unité de séparation d'air au point de mélange; et/ou
ii) des moyens pour amener un fluide provenant de l'unité de séparation d'air jusqu'à une usine (29), et des moyens pour dériver le au moins un gaz supplémentaire à partir de l'usine.

2. Dispositif selon la revendication 1, comprenant un échangeur de chaleur (130), des moyens pour envoyer l'air à l'échangeur de chaleur, des moyens pour envoyer l'air à partir de l'échangeur de chaleur à l'unité de séparation d'air (100), des moyens pour envoyer le courant de gaz enrichi en azote à partir de l'unité de séparation d'air à l'échangeur de chaleur, des moyens pour envoyer le courant enrichi en azote à partir de l'échangeur de chaleur au point situé en amont du dispositif de dilatation, et des moyens pour envoyer le au moins un gaz supplémentaire dans le courant de gaz enrichi en azote en un point situé en amont ou en aval de l'échangeur de chaleur.

3. Dispositif selon la revendication 1 ou 2, dans lequel le dispositif de dilatation à l'entrée duquel le mélange gazeux est envoyé est une turbine (21).

4. Dispositif selon la revendication 1 ou 2, comprenant des moyens pour ajouter un combustible au mélange gazeux en amont du brûleur.

5. Dispositif selon l'une quelconque des revendications précédentes, comprenant un compresser (120) pour fournir de l'air à l'unité de séparation d'air (100) et/ou au brûleur (160).

6. Dispositif selon l'une quelconque des revendications précédentes, comprenant des compresseurs respectifs pour comprimer de l'air pour le brûleur (160) et pour l'unité de séparation d'air (100).

7. Dispositif selon l'une quelconque des revendications précédentes, comprenant des moyens (19, 130) pour chauffer le courant enrichi en azote, de préférence situés en amont ou en aval du point de mélange.

8. Dispositif selon la revendication 7, dans lequel les moyens pour chauffer le courant enrichi en azote comprennent un échangeur de chaleur (19) et des moyens pour envoyer un courant de produit ou de déchet gazeux (15) à partir d'une usine dans laquelle un procédé exothermique est exécuté, ainsi qu'au moins le courant enrichi en azote jusqu'à l'échangeur de chaleur.

9. Dispositif selon la revendication 8, comprenant des moyens pour amener un gaz ou un liquide (9) produit par l'usine de séparation d'air ou de l'air comprimé en provenance d'un compresseur (120) de l'installation jusqu'à l'usine (29) dans laquelle le procédé exothermique est exécuté.

10. Dispositif selon l'une quelconque des revendications précédentes, comprenant des moyens pour envoyer un courant enrichi en oxygène (9) à partir de l'unité de séparation d'air jusqu'à un reformeur (29), et des moyens pour dériver un courant enrichi en dioxyde de carbone (5) à partir d'un gaz produit par le reformeur, et des moyens pour envoyer le gaz enrichi en dioxyde de carbone dans le courant d'azote.

11. Procédé de séparation d'air intégré utilisant une unité de séparation d'air (1, 100) et un dispositif de dilatation (21, 150), comprenant les étapes consistant à envoyer de l'air à l'unité de séparation d'air, à envoyer un courant enrichi en azote à partir de l'unité de séparation d'air à un point situé en amont du dispositif de dilatation, et à envoyer au moins un courant de gaz supplémentaire (5, 24, 31, 180) autre qu'un courant de combustible à un point situé en amont du dispositif de dilatation dans le but de former un mélange avec le courant enrichi en azote, à envoyer le mélange gazeux à l'entrée du dispositif de dilatation (21) ou à envoyer le mélange gazeux à l'entrée d'un brûleur (160) d'un dispositif de dilatation (150) d'une turbine à gaz, le au moins un gaz supplémentaire (5, 24, 31, 180) contenant au moins 25 % molaires d'oxygène, et/ou au moins 2 % molaires d'argon, et/ou au moins 10 % molaires de dioxyde de carbone, et dans lequel le au moins un gaz supplémentaire est un gaz produit par l'unité de séparation d'air et/ou un gaz dérivé d'une usine alimentée par un fluide provenant de l'unité de séparation d'air.

12. Procédé selon la revendication 11, dans lequel au moins un gaz supplémentaire (5, 24, 180) contient au moins 70 % molaires d'oxygène, et/ou au moins 30 % molaires d'argon ou au moins 90 % molaires de dioxyde de carbone.

13. Procédé selon la revendication 12, dans lequel au moins un gaz supplémentaire contient au moins 80 % molaires d'oxygène, ou au moins 80 % molaires d'argon ou au moins 95 % molaires de dioxyde de carbone.

14. Procédé selon l'une quelconque des revendications 11 à 13, comprenant l'extraction dudit gaz supplémentaire (5, 24, 31, 180) hors de l'unité de séparation d'air.

15. Procédé selon l'une quelconque des revendications 11 à 14, dans lequel le courant enrichi en azote est chauffé soit avant, soit après l'étape de mélange à une température au moins égale à la température ambiante, de préférence au moins égale à 600°C, avant d'être envoyé au point situé en amont du dispositif de dilatation via un échange de chaleur indirect avec un courant de gaz qui est un courant de produit ou un courant de déchet.

16. Procédé selon la revendication 15, dans lequel le courant de gaz est produit par une unité alimentée par un courant enrichi en oxygène ou par un courant enrichi en azote, ou par un courant enrichi en argon en provenance de l'unité de séparation d'air (1, 100), ou par un courant d'air comprimé en provenance d'un compresseur (120) qui alimente aussi en air l'unité de séparation d'air.
